# EUROPEAN PATENT APPLICATION

(11) **EP 1 300 991 A1**
(43) Date of publication of application: **09.04.2003**
(21) Application number: 01308401.7
(22) Date of filing: 02.10.2001
(51) Int. Cl.: H04L 12/56

(54) **A method for filtering redundant data packets**

(71) Applicant: LUCENT TECHNOLOGIES INC., Murray Hill, New Jersey 07974-0636 (US)
(72) Inventor: Gruhl, Stefan, 90443 Nuremberg (DE); Bernhard, Urs Peter, 90491 Nuremberg (DE); Mueckenheim, Jens, 90411 Nuremberg (DE); Schuler, Jorg, 01099 Dresden (DE)
(74) Representative: Sarup, David Alexander

(57) **Abstract**

The invention proposes a method for improving network performance of a data packet switched network which encompasses at least one unit for sending data packets (SU), at least one unit for receiving data packets (RU), and at least network element (Snoop) for controlling and/or monitoring data packet traffic between said sending and said receiving unit whereby in case of at least one redundancy of packet occurs within said network, said redundant packets are filtered out from said network prior to receipt of the receiving unit.

## Description

### Field of the Invention

The invention relates to a method for improving network performance of a packet switched network according to the features of claim 1, a computer program for carrying out the method set forth in claim 9, and an apparatus in accordance with the features of claim 10 wherein the method and the computer program can be carried out.

### Background of the Invention

Methods for improving data transmission within modern packet switched networks, such as ISDN, GSM, GPRS and UMTS are well known in the art. Especially, the backbone data traffic of wireless networks often relies on the TCP/IP transport protocol. TCP stands for Transmission Control Protocol and IP for Internet Protocol. TCP is the prime data transport protocol in the internet (about 70%) which is likely to hold for mobile data networks.

TCP/IP ensures an end to end reliable data transmission by numbering IP segments with unique sequence numbers, checking for their proper order at the recipient and using a back-channel for acknowledgements. TCP only issues positive ACKs and in the case of a corrupted IP packet some old TCP implementations rely only on time-outs at the sender side, when waiting for the ACK. Some modifications use duplicate ACKs for the last valid IP packet to emulate a NACK.

In wireless networks TCP performance problems are well investigated and many proposals solving the sender's date rate reduction are available.

So far, reference is made for example to the so called Berkeley Snoop Protocol. The Snoop protocol is a so called TCP-aware link layer mechanism designed to improve the performance of TCP over wireless links.

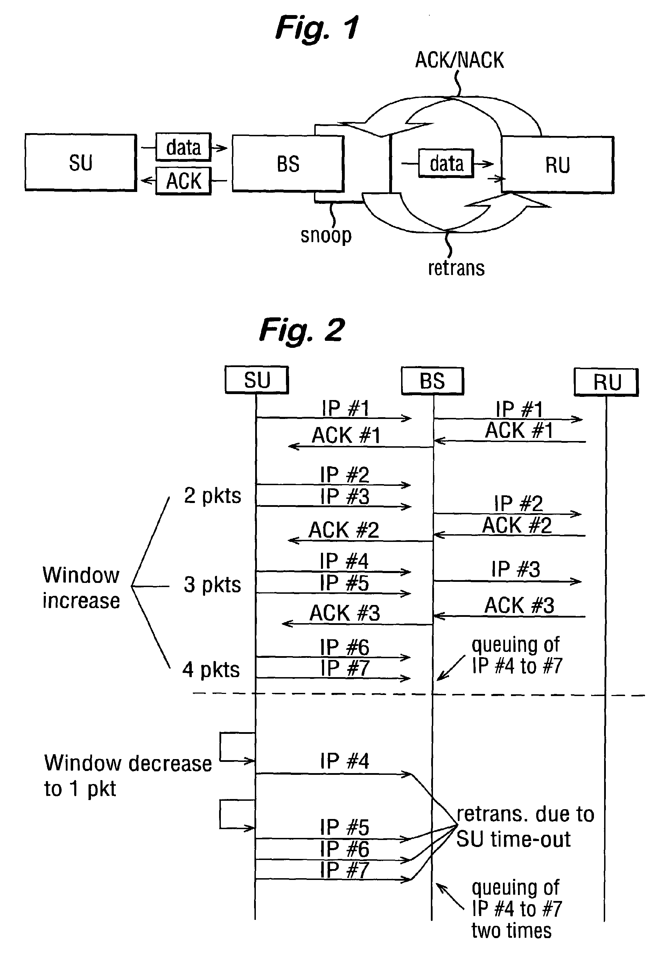

The Snoop protocol works by deploying a Snoop agent at the base station BS and monitors all IP traffic to the mobile receiver RU (see Fig. 1). Incoming data packets are locally cached and potential NACKs or duplicate acknowledgements (DUPACKs) from the mobile receiver (RU) are served from the local cache by a local retransmission of the corresponding data packets. Positive Acks from the mobile are forwarded to the Sender.

Thus, the agent suppresses the transmission of DUPACKs to the sender SU from errors on the airlink between the base station BS and the mobile receiver RU, thereby preventing a decrease of the transmission window on the sender side SU.

Errors owing to data packet losses on the backbone between the sender SU and the base station BS are covered by the sender's time out mechanism.

Although the technique applied by the Snoop protocol betters the throughput of wireless networks to some degree, further improvements remain desirable.

Insofar, the Snoop protocol does not take into account the problems arising, if redundant data packets are generated because of server time outs or network congestion or any other possible reason. One effect of this is that even those packets which were not lost due to any congestion were sent to a receiving unit owing to retransmission at least once again after the congestion is resolved. Consequently, a more of link capacity, particularly between the base station and a receiver for the transmission of surplus data packets is needed.

Yet, especially within public cellular wireless networks capacity is scarce and the network operator is highly interested in saving transmission bandwidth over the air link in order to sell this capacity to a competing user.

### Summary of the Invention

These and other disadvantages have lead to the object of the present invention to provide a method which further increases speed as well as capacity of modern data networks.

The inventive solution is obtained by a method incorporating the features of claim 1. Moreover, an apparatus for carrying out the inventive method is defined in claim 10. Furthermore a computer program can be provided having program code means for carrying out the method when the program is run in a network unit and/or computer.

Preferred and/or advantageous embodiments or refinements are subject matter of the respective dependent claims.

In this regard the invention proposes a method for improving network performance of a data packet switched network which encompasses at least one unit for sending data packets, at least one unit for receiving data packets, and at least one network element for controlling and/or monitoring data packet traffic between said sending and said receiving unit, whereby in case of at least one redundancy of packet occurs within said network, said redundant packets are filtered out from said network prior to receipt of the receiving unit.

Most favorably, the inventive method is applied within wireless networks based on TCP/IP-protocol standard.

These networks provide the possibility that the redundancy of IP packets can be clearly indicated to the inventive method.

Moreover, therein all IP traffic during the whole lifetime of a TCP flow can be monitored at one central instance (e.g. within a GGSN network element in recent 3GPP network architecture proposals). Given appropriate monitoring of all IP packets according to the invention one can safely detect IP packets associated to the well defined TCP-protocol and build full state maintenance for each TCP flow traversing the respective nodes.

Due to the standardized nature of the TCP protocol the indication of TCP retransmissions is possible. By monitoring the ACKs on the TCP backward channel, it can be easily learnt which TCP packets are indeed successfully received and thus avoiding any retransmissions due to server-side timeouts.

In a further development of the invention the redundant packets are filtered or discarded at the network element. This is on contrary to state of the art methods which discard redundant or duplicate data packets at the receiving unit. Yet filtering the redundant packets at the network element opens up the advantage that these packets are not transmitted over the air link, thereby providing link capacity to other IP packets, which are not redundant to the receiving unit. Thus the total delay of the packet or TCP transfer is improved, or the capacity may be provided to packets from another flow.

It may be that the IP packets are segmented during their transmission. Therefore an advantageous development of the invention comprises that the IP packets are first reassembled before they are processed according to the inventive method.

Another favorable development of the invention encompasses that the inventive filtering process comprises a search for redundant data blocks queuing, particularly at the network element, and having the same source and/or destination address and/or the same source and destination port numbers and/or the same sequence number and/or identical packet length and/or packet content. The latter two possibilities are optional. If such a packet is found, the packet at the instance of arrival at the network element it is discarded. No further action is performed. It has been proved by simulations that TCP-retransmissions due to server side timeouts and thus the generation of redundant data packets have a significant impact on the performance parameters of realistic networks.

In an further advantageous embodiment of the invention the filtering of redundant packets comprises a determining of or differentiation between retransmitted data packets and/or new packets. In this way, it can be decided which data packets are actually redundant.

Additionally in a most advantageous way, the inventive method determines or analyses whether during the time of retransmission the originally transmitted data packet, which had been timed out or unacknowledged and which is the reason for the retransmission, has been transmitted in the meantime. This can be done either by checking or controlling a provided NACK or DUPACK signal of the outstanding signal or data packets and/or by a time-out mechanism which are well known in the art.

Moreover, the invention favorably provides that especially in case of a successful transmittal of the former or old data packet particularly in the meantime of retransmission the retransmitted data packet is discarded or deleted. Thus the generation of redundant data packets can be advantageously avoided.

In a further development of the inventive method, which especially takes into account the case when a retransmitted data packet still encounters its forerunner comprising the same content at the network unit the forerunner is replaced by the retransmitted or redundant data packet.

Latter particularly assures that the retransmission may be due to a former bit error in the old packet when traveling from a backbone to the network element. The replacement in the cache will take care that the replaced packet will be retransmitted in the future instead of the potentially faulty one.

Especially, in any case, if there is a retransmitted or redundant data packet generated, the redundant packets are not automatically forwarded to the receiving unit but rely on TCP mechanisms to recover from loss after the loss occurred and is detected, either by DUPACK or time-out. This grounds on the basic idea of the invention that a sending of the redundant data packet makes only sense if the forerunner is lost.

A further major advantage of the presents inventions grounds on the fact that redundant packets or duplicates of packets can be identified as being redundant by the inventive method, after they have left the local queue or local cache of a network unit. The reason for this is obvious, because the inventive methods has the analyzing ability to retrieve the queuing information by itself directly out of the data flow upon the above described checking sequences to find out redundant packets. This is particularly favorable, if the method is performed at a central network element with for example restricted access to queuing information of a base station or decentralized network unit.

Yet, the scope of invention is not restricted to just a method for improving network performance but incorporates also a computer program having program code means for carrying out the inventive method, and further more refers to an apparatus for improved network performance of a data packet switched network, particularly for carrying out the inventive method and/or the inventive computer program as described above encompassing at least one network element for controlling and/or monitoring data packet traffic between a sending and a receiving unit, a means for retransmitting of not yet received data packets by said receiving unit, thereby comprising means for filtering redundant packets occurring within said network provided such that said redundant packets are filtered out from said network prior to receipt of the receiving unit.

### Brief Description of the Drawing

The invention together with additional features and advantageous thereof will be best understood from the following description.

It is shown:
Fig. 1 a schematic diagram displaying a snoop architecture with local retransmission at the snoop agent.
Fig. 2 an example of a TCP/IP data packet transfer.
Fig. 3 a schematic diagram displaying the handling of redundant data packets according to a first embodiment of the invention.
Fig. 4 a flow chart of the snoop algorithm showing the handling of data packets upon arrival at the snoop agent.
Fig. 5 a flow chart of the algorithm of a second embodiment of the invention.
Fig. 6 a schematic display of logical hops where potential losses can occur.

### Detailed Description of the Drawings

Figure 2 shows an example of a TCP/IP data packet transfer. In MSC (Message Sequence Chart, notation standard by ITU 2.120) alike syntax the TCP-sender, a hop called BS for wireless Base Station and the receiving unit RU, depicted as for Mobile Station RU is shown. The BS is a place where a snoop-agent according to the state of the art might be located. The depicted sequence order was chosen with regard to the slow air-link capacity between BS and RU. Thus an acknowledgement signal ACK travels backward while another internet protocol packet IP is still about to be sent out on the down-link DL. Down-link denotes generally the direction of data traveling from the mobile receiver RU to the base station BS to the mobile receiver. For this example this is the IP data traffic. We assume TCP handshake is already completed. The first IP packet with the sequence number #1 is sent. Due to TCP slow start implementation, the sender waits for the acknowledgement (ACK) for this packet. Once received the TCP sender increases its transmission window by one packet pkt. This allows the transmission of two further pkts #2 and #3. First packet IP#2 is sent over the airlink and once received by the RU, it is acknowledged by the RU. This ACK#2 passes to the sender. This again increases the transmission window size by one, resulting in the transmission of IP#4 and IP#5. Thus the down link flow comprises a total of 3pkts. Then packet IP#3 is transmitted analogously. Its ACK#3 once again increases the send window by one and lets the sender transmit another 2 packets pkts, thereby increasing the data flow to a total of four packets pkts.

Now a congestion is assumed in the wireless cell. Assume this is background TCP traffic with low priority. Thus all four IP packets pkts #4-#7 are queued. If that takes longer than the time-out value in the sender, first IP#4 is timed out, later the other packets are timed out as well. The first time-out decreases the send window back to 1 IP pkt.

This effect is typically investigated and methods are applied to avoid this effect, because the user-perceived throughput will decrease from another slow start procedure.

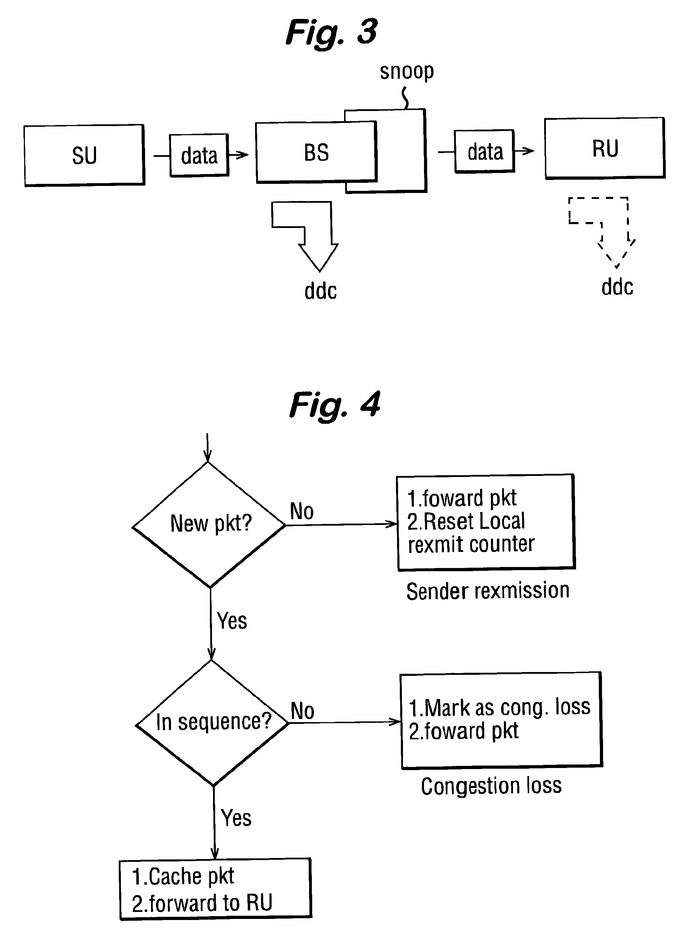

The invention focuses on a second effect. The retransmissions are received as regular IP packets. Without any analysis they are simply stored for transmission in the BS. Once the congestion is resolved and the flow will continue to receive service the first four IP packets #4-#7 are transmitted. During that transmission they will be subsequently acknowledged and IS #8-#11 will be sent from the sender. Unfortunately the retransmitted and therefore redundant IP packets #4-7 are still queued and are transmitted first to the receiving unit RU. These packets are discarded ddc not until they have been received by the receiving unit RU (doted arrow at Fig. 3). This is not desirable.

According to one embodiment of the invention which is schematically displayed in connection with Fig. 3 the queuing data packets are analyzed at BS such that redundant data packets are discarded or deleted thereat. Thus, upon arrival of an IP packet the according queue(s) are searched for packets, which - have the same IP-source and IP-destination address - have the same source and destination port numbers, and - the same TCP-sequence number. - optionally one may decide to also check for identical TCP packet length or TCP packet content. If such a packet is found, the just arrived packet is instantly discarded. No further action is performed.

The inventive solution will discover the retransmitted data packets once they arrive at the BS. Thus the retransmissions IP #4-7 will be deleted. At the end of the example in Figure 2 or 3 a queue with only four entries IP #4-7 will remain. For large send windows, which is the most desirable TCP transmission mode allowing for high data rates, this effect can be up to 64 KB, which is the typical maximum window size in most TCP implementations. The loss in effective bandwidth can thus be severe.

A further embodiment of the invention is now described in connection with Figures 4 to 7. This second embodiment relies on a framework to investigate all IP traffic and associating its packets to TCP flows resulting in a tight flow control between the inventive snoop-agent and a base station BS. So far, the present invention is a partial further development of the so called Berkley Snoop protocol or agent.

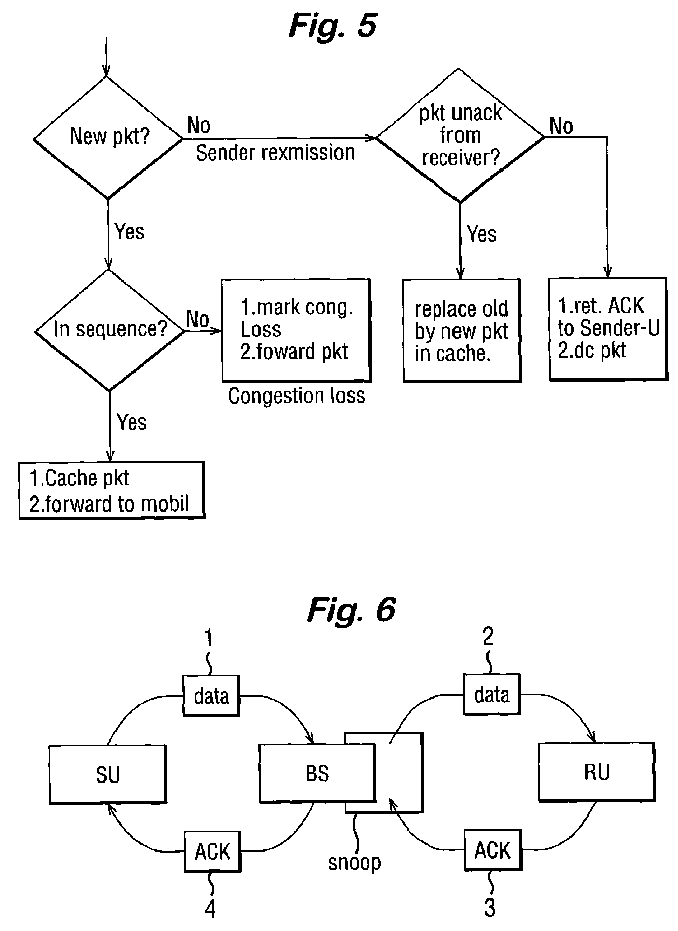

As can be seen from Figure 5, upon the arrival of down link TCP data packets, the Berkley Snoop agent does not differentiate whether a data packet has been already sent or not but always forwards the packet even when the forerunner of the packet has already been transmitted successfully in the meantime.

In case of the Berkley Snoop algorithm or method, when a TCP packet is received it is at first checked whether the received packet is a new packet pkt. A new packet is given if the sequence number of TCP data packet "TCP_seq_nr" is either bigger than that of the maximal sequence number seen so far "Max_seq_nr_seen_so_far" or there is no sequence number at all in the cache of the snoop agent "[TCP_seq_nr] = empty". Otherwise the snoop agent has received a retransmission of an already sent packet. At the latter instance the snoop agent will forward the data packet to the receiving unit RU indicating that the packet is a retransmission. The receiving unit RU then has to discard the surplus data packet. In consequence however, additional link capacity must be provided owing to the redundant hand over of data packets from the snoop agent to the mobile receiver (RU).

Therefore especially, this is one starting point of the present invention. For the ease of description, as to Figure 4, we do not explain a full BS agent, but reference the TCP-snoop algorithm :
http://nms.lcs.mit.edu/∼hari/papers/snoop.html, and describe the necessary changes to implement the inventive embodiment into this framework. Particularly we assume that handling of ACKs (acknowledgements) and DUPACKs (dublicate acknowledgements) from the receiver works. Details, as the implementation of RTT-estimation (Round Trip Time - estimation) and the management of local timeouts is also not changed nor described here.

The core of our algorithm is the altered retransmission branch denoted as "sender rexmission" in Figure 5. At first, upon the arrival of a down link TCP data packet, the packet is checked for its "novelty", i.e. "new pkt?", see the description of the snoop algorithm. If the variable "new pkt?" is evaluated as to be not new but old "new pkt?" is set to be "No". In this case, according to the invention, it is checked whether for the retransmitted packet an unacknowledgement or acknowledgement signal was received in the meantime, i.e. "Pkt unack from receiver?". If the packet were acknowledged in the meantime, "Pkt unack from receiver?" is set to be "No", the acknowledgement ACK would be retransmitted to the sender unit, i.e. "ret. ACK to Sender-U", and the retransmitted packet would be discarded "dc pkt". If the packet were left unacknowledged in the meantime, "Pkt unack from receiver?" is set to be "Yes", the retransmitted packet just replaces its forerunner in the snoop cache, i.e. "replace old by new pkt in cache".

For the evaluation of the variable "Pkt unack from receiver?" it is checked whether the TCP sequence number is greater than the first sequence number in the cache (TCP_seq_nr > first_seq_nr_in_cache) and whether the variable "cache[TOP_seq_nr].acked" is "no". The variable "first_seq_nr_in_cache" is updated by the snoop cache maintenance state variable and denotes the first TCP packet that is stored in the cache. This is due to the fact that original snoop does not store all TCP packet, but only a limited window of yet unacknowledged TCP packets. The variable cache[TCP seq_nr].acked is initialized with "no" and set to "yes", when a ACK for this packet is received by snoop ACK.

The following gives an over-view of the above elaborated method for finding out redundant or retransmitted packets:

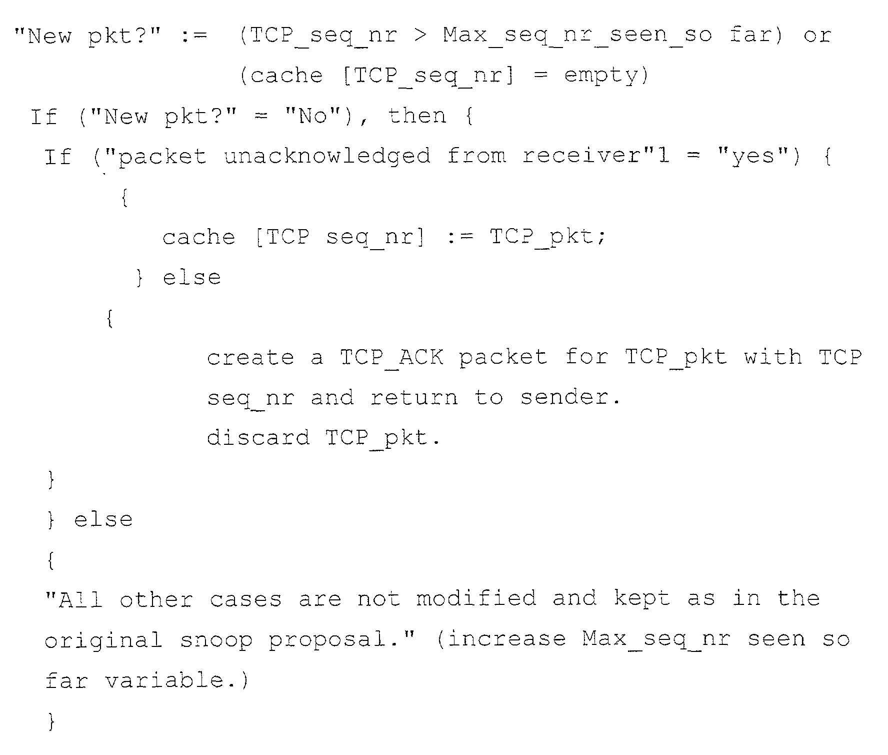

Every action that reads "forward pkt" also starts a local retransmission timer. When the timer expires, the packet will be sent again. A retransmission counter, initialized with 1 at the time of the first transmission, is increased by one. If this value is smaller than a fixed system parameter MAX RETRANSMISSION ATTEMPTS, e.g. with the value 5, the timer is reset again.

We do not forward the packet as described above. If the packet is already acknowledged by the receiver, we discard the packet. If it is still in the cache, we replace the packet in the cache. The reason for the replacement is the following. The retransmission may be due to a former bit error in the old packet when traveling the backbone to the snoop agent. This is extremely rare, but might happen. The replacement in the cache will take care that the replaced packet will be retransmitted in the future instead of the potentially faulty one.

It should be noted that the inventive method in conjunction with the Berkley Snoop agent for investigating all IP traffic need not be located at a base station since the packets can be analyzed and thus identified as according to the present invention in generally anywhere in the data flow. Therefore, the invention provides the possibility to identify duplicate packets after they have left the local queue of stored IP packets. This is particularly favorable, if the algorithm is located at a central network element with restricted access to the base station BS data packet queue. The centralization is especially necessary due to the mobility among several BS, therefore the inventive snoop agent would probably not located at the BS but in a more centralized network element, as e.g. the SGSN (Serving GPRS Support Node) or GGSN (Gateway GPRS Support Node) in the GPRS/UMTS terminology.

Our second embodiment of the invention, as described above, generally assumes that actually lost packets are negatively acknowledged by the receiver with a DUPACK. Due to a couple of special cases which are described hereinafter in connection with Figure 6, this might not be the case.

Reasons for receiving no DUPACK are:
- the receiver has an old TCP implementation which is not issuing DUPACKs at all but solely relying on sender retransmissions based on timeouts.
- A packet is lost in wireless hop 2 (Fig. 6), which is the last packet of a transmission or the packet is the first and only one after TCP slow start. The receiver does not recognize the loss because of no following packets.
- The DUPACK is issued but lost in wireless hop 3 (Fig. 6).

These potential problems are solved by introducing our own retransmission timer to the snoop agent. This solves the problems mentioned above. It will always assure a retransmission after some time-out.

Figure 6 gives an overview of the logical hops where packets may be lost. In the following table for each hop shown in Fig. 6, it is explained how the inventive method according to the second embodiment works, i.e. how TCP will recover the losses according to the invention.

As already mentioned there may be cases, which are referred to in the table too, when a loss of packet occurs and NO DUPACK is issued, the reason for this could be that there are no following packets, because it is last packet of a transmission, or the send window is of size one, or following packets are lost or excessively delayed. Finally the receiver may have an old TCP implementation without DUPACK implementation.

It should be noted that if a loss of packet at hop 1 occurs and the lost packet was already received by the snoop-agent, as described in the table, the hop-1-loss may be also detected by following packets and could be acknowledged in this case.

Again it should be noted that the removal of redundant data comprises many advantageous:

The individual TCP flow, which receives its redundant packets removed, experiences that its remaining own IP packets will receive faster service. Thus the whole data transfer speeds up. Moreover, the overall offered load to the network is reduced, thus all competing flows will receive faster service. Furthermore, given that enough data transfer is requested by subscribers from the operator, i.e. the amount of transferred volume is limited by network resources, this additional traffic will increase revenue for the operator.

Thus, the invention effectively reduces the double transmission of redundant IP packets over the air interface. Improving the effective network capacity is a strategic market differentiator.

| Referred Table: | | | |
|---|---|---|---|
| logical hop, where loss occurs | **cases** | | **action of inventive TCP snoop** |
| 1 | Lost packet was not yet received by snoop-agent | Following packets indicate loss to receiver. Receiver issues DUPACK. | TCP snoop ack() realizes that its cache is not yet filled for the requested IP packet, thus it cannot satisfy the retransmission request from the MS and forwards the DUPACK to the sender. The sender does a retransmission. |
| | | NO DUPACK is issued. 2 | Sender times out, and resends the packet. As Snoop has not yet cached the packet, the arrival will be treated as the regular, prime packet arrival. The packet will not be discarded, because it is no duplicate to the snoop agent. |
| | Lost packet was already received by snoop-agent. | | no action performed |
| 2 | Data packet is lost. Following packets indicate loss to receiver. The receiver issues DUPACK. | | TCP snoop receives DUPACK, has cached the packetand does local retransmission. |
| | Packet is lost, but NO DUPACK is issued, (case 2b) | The snoop agent times out for this packet before a time-out based retransmission of the sender is received and the snoop agent does a local retransmission | If the packet from this retransmission was in themeantime acknowledged, it is marked as successfully received in the cache. If the ACK was too slow to reach the sender before a sender time-outs there will be a late incoming retransmission from the sender. In this case the retransmission will find the TCP packet already ACKed and it will be discarded. For security another ACK for this packet is created and is sent back to the sender. |
| | | | If the packet was not yet acknowledged from thereceiver, the TCP_pkt will replace the version in the cache. |
| | | A time-out based retransmission of the sender is received before the snoop agent times out for this packet. | The TCP_pkt will replace the version in the cache. Atsome time in the near future the local timer will expire and retransmit this packet. |
| 3 | ACK is lost. | | As case 2b at logical hop 2 |
| | DUPACK is lost. | | As case 2b at logical hop 2 |
| 4 | ACK is lost. | | Sender will send retransmission. Snoop agent willdiscover that this packet was successfully ACKed, returns another ACK to the sender and discards the retransmission. |
| | DUPACK is lost. | | DUPACK is only forwarded to the sender, if the datawas not found in the local cache. The sender will time-out and do a retransmission. The retransmission will fill the cache and the packet will be forwarded. |

## Claims

1. Method for improving network performance of a data packet switched network comprising:
at least one unit for sending data packets,
at least one unit for receiving data packets, and
at least one network element for controlling and/or monitoring data packet traffic between said sending and said receiving unit,
**characterized in that**,
that if at least one redundancy of packet occurs within said network, said redundant packet or packets are filtered out from said network prior to receipt of the receiving unit.

2. Method according to claim 1 wherein said network is a wireless network based on TCP/IP-protocoi standard.

3. Method according to claim 1 or 2 wherein filtering of said redundant packets comprises discarding the packets at said network element.

4. Method according to one of the preceding claims wherein filtering of redundant packets comprises a search for packets queuing and having the same source and/or destination address and/or the same source and destination port numbers and/or the same sequence number and/or identical packet length and/or packet content.

5. Method according to one of the preceding claims wherein filtering of redundant packets comprises a determining of retransmitted data packets and/or new packets.

6. Method according to one of the preceding claims wherein filtering of redundant packets comprises a determining of redundant packets by the control of acknowledgement and/or unacknowledgement and/or time-out signals corresponding to the data packets.

7. Method according to one of the preceding claims wherein filtering of redundant packets comprises acknowledging and/or discarding of data packets.

8. Method according to one of the preceding claims wherein filtering of redundant packets comprises replacing of retransmitted packets (within a catch located) at the network element.

9. Method according to one of the preceding claims wherein the method comprises a timed retransmission of data packets.

10. Apparatus for improved network performance of a data packet switched network, particularly for carrying out a method according to one of the preceding claims comprising:
at least one network element for controlling and/or monitoring data packet traffic between a sending and a receiving unit,
a means for retransmitting of not yet received data packets by said receiving unit,
**characterized in that**,
the apparatus further comprises means for filtering redundant packets occurring within said network provided such that said redundant packets are filtered out from said network prior to receipt of the receiving unit.
